# EUROPEAN PATENT APPLICATION

(11) **EP 1 506 721 A1**
(43) Date of publication of application: **16.02.2005**
(21) Application number: 04018931.8
(22) Date of filing: 10.08.2004
(51) Int. Cl.: A41D 31/02, A41D 31/00, A41D 13/00

(54) **Chemical-resistant protective clothing**

(30) Priority: 11.08.2003 JP 2003291066
(71) Applicant: Kuraray Co., Ltd., Kurashiki-shi, Okayama (JP); Meditec Japan Co., Ltd., Osaka-shi, Osaka (JP)
(72) Inventor: Konishi, Takeshi, c/o Kuraray Co., Ltd., Chuo-ku, Tokyo (JP); Kawasaki, Yasutoshi, c/o Kuraray Co., Ltd., Chuo-ku, Tokyo (JP); Maki, Motochika, c/o MEDITEC JAPAN Co., Ltd., Osaka-shi, Osaka (JP)
(74) Representative: VOSSIUS & PARTNER

(57) **Abstract**

The present invention relates to chemical-resistant protective clothing excellent in chemical permeation resistance against a variety of harmful chemical substances. Specifically the present invention provides chemical-resistant protective clothing which has chemical permeation resistance to methanol of at least 120 minutes and which is formed by bonding a composite material comprising at least one resin layer containing at least 90% by mass of ethylene-vinyl alcohol based copolymer; at least one resin layer composed of a resin having a melting point of 160°C or higher; and a fiber layer wherein the respective layers are laminated with one another to constitute the composite material. Further, the present invention more economically provides chemical-resistant protective clothing excellent in resistance against chemicals and water by bonding the composite material by ultrasonic bonding.

The protective clothing according to the present invention is excellent in chemical permeation resistance against a variety of harmful chemical substances whether they are in the form of gas, liquid or particle and at the same time, is excellent in water resistance at a bonded portion, thus making itself extremely useful as protective clothes.

## Description

The present invention relates to chemical-resistant protective clothing. More particularly, it pertains to protective clothing which is excellent in resistance against harmful chemical substances such as acids, alkalis, organic chemicals, other gases, liquids and particulate substances and in particular, in resistance against chemical permeation.

Chemical-proof protective clothing such as hood, gloves and shoes in addition to work clothes is used for the purpose of preventing a harmful chemical substance and the like from infiltrating thereinto so that workers wear in order to protect their own bodies in a work dealing with harmful chemical substances such as acids, alkalis, organic chemicals, other gases, liquids and particulate substances. There are previously known as the aforestated protective clothing, for instance, a laminated product in which fabrics are laminated with finely porous membranes made of polypropylene resin, nonwoven fabrics formed by flash spinning of a polyolefin resin, a laminated product in which fabrics are laminated with gas-impermeable resin membranes and the like. Among the protective clothing as mentioned above, sufficient infiltration resistance against a variety of harmful chemical substances is not obtained from any of the protective clothing using finely porous membranes made of polypropylene resin and the protective clothing using the nonwoven fabrics formed by flash spinning of a polyolefin resin, thereby bringing about the problem that adverse influences from chemical permeation upon human bodies have been unavoidable.

Incidentally, there is proposed protective clothing comprising a fabric having adhesively stuck water repellent synthetic resin films such as polyurethane films which are equipped with pores smaller than water droplet of the chemicals to be sprayed, and which reject chemicals but enable sweat to exhale (refer to Japanese Patent Application Laid-Open No. 96267 / 1985 (Showa 60). However, the aforesaid protective clothing has been insufficient in terms of infiltration resistance against harmful substances in the form of gas or liquid.

There is also proposed protective clothing in which films comprising ethylene-vinyl alcohol based copolymer are used as a resin layer for laminating a fabric (refer to Japanese Utility Model Application Laid-Open No. 136319 / 1987 (Showa 62) and WO88 / 02604). Nevertheless, there has been pointed out such problem that the aforesaid protective clothing, although exhibits resistance against specific chemicals to some extent, is inferior in resistance against alcohols and the like. It is not seldom that alcohols such as methanol are used, for instance, as a solvent or dispersant for chemicals in a variety of works wherein workers wear protective clothes and thus, in JIS T 8115, that is, the standard of chemical-proof protective clothing (protective clothes), alcohols are cited as an object chemical against which the protective clothing should be resistant.

In addition, at the time of manufacturing protective clothing, a sewn part is frequently coated with a resin or heat sealed in place of sewing so as not to allow a harmful chemical substance to permeate through the sewn part. However, the foregoing suffers from the disadvantage that pinholes are more prone to be generated at a coated sewn part and heat sealed part, thereby markedly impairing the chemical permeation resistance and water resistance. That is to say, economically advantageous heat sealing method has been difficult to apply to the majority of the above-stated instances.

It is an object of the present invention to provide chemical-resistant protective clothing which exhibits excellent resistance to chemical permeation not only for limited harmful chemical substances but also for substances such as alcohols.

This object could be achieved on the basis of the finding
that protective clothing comprising a composite material of specific constitution is adaptable to the above-stated object, and also that even in the case where the above-mentioned composite material is ultrasonically bonded, there is obtainable protective clothing which is excellent in chemical resistance and water resistance, and which is free from the generation of pinholes.

That is to say, the present invention provides chemical-resistant protective clothing which is excellent in chemical permeation resistance against a variety of harmful chemical substances including alcohols such as methanol and which is formed by bonding a composite material comprising at least one resin layer containing at least 90% by mass of ethylene-vinyl alcohol based copolymer; at least one resin layer composed of a resin having a melting point of 160°C or higher; and a fibrous layer wherein the respective layers are laminated to one another to form the composite material.

Further, the present invention economically provides protective clothing excellent in chemical-resistance and water resistance by bonding the composite material by ultrasonic bonding.

The protective clothing according to the present invention is excellent in chemical permeation resistance against a variety of harmful chemical substances whether they are in the form of gas, liquid or particle and at the same time, is excellent in water resistance, thus making itself extremely useful as protective clothes.

The protective clothing according to the present invention, which is exemplified by work clothes of various types, hood, gloves and shoes, necessitates the use of a layer containing at least a specific amount of ethylene-vinyl alcohol based copolymer (hereinafter sometimes abbreviated to "EVOH") as a resin layer which constitutes the above-stated protective clothing.

The EVOH to be used for the protective clothing according to the present invention is obtained by saponifying ethylene-vinyl ester copolymer. The ethylene unit content thereof is in the range of 20 to 60 mol%, more preferably 25 to 50 mol%, and the degree of saponification for the vinyl ester component such as vinyl acetate is preferably at least 90 mol%.

The resin layers which constitute the protective clothing according to the present invention has at least one layer containing at least 90% by mass of EVOH, preferably at least 95% by mass thereof, more preferably at least 99% by mass thereof. The EVOH content of the aforesaid resin layer containing EVOH being less than 90% by mass results in lowering of gas permeation resistance for chemical substances, thus failing to achieve the object of the present invention. The aforesaid resin layer may be blended with another resin, for instance, polyethylene and polypropylene, however the blending proportion thereof is preferably less than 10% by mass, most preferably less than 1% by mass.

It is more preferable that the resin layer to be used for the protective clothing according to the present invention has at least one layer of film consisting of 100% by mass of EVOH from the viewpoint of its being capable of exerting resistance against more kinds of chemicals.

It is necessary in the protective clothing according to the present invention to laminate, e.g. by means of a laminating method, the layer containing at least a specific amount of EVOH (hereinafter sometimes referred to as "EVOH film (layer)" or "EVOH layer") on at least either side thereof with the layer having a melting point or softening point (hereinafter simply referred to as "melting point") of 160°C or higher, preferably 200°C or higher.

That is to say, in the case of heat sealing the film, the lamination of the resin layer having a melting point lower than 160°C causes moisture contained in EVOH to expand by heat to generate pinholes on molten film, thereby markedly deteriorating the chemical resistance and water resistance. It is therefore, indispensable to stick resin layers having a specific melting point to each other in order to prevent the generation of pinholes due to sealing.

By further placing the resin layer having such a melting point, it is possible to render the protective clothing excellent in resistance even against alcohols for which satisfactory effect is difficult to exert with the EVOH film layer alone. Preferably, the resin layer having such a melting point is composed of crystalline resin which is free from aromatic ring and is comparatively flexible.

Examples of the resin having a melting point of 160°C or higher to be used in the present invention include polypropylene; polyvinyl alcohol; polyamide based resin such as nylon 6, nylon 66, nylon 610, nylon 11 and nylon 12; vinylidene chloride based resin such as polyvinylidene chloride, vinylidene chloride-vinyl chloride copolymer, vinylidene chloride-acrylic acid ester copolymer and vinylidene chloride-acrylonitrile copolymer each in a single form or in the form of composite/laminate resin of at least two species. Particularly preferable resin among them are polypropylene, polyamide based resin and vinylidene chloride based resin, of which nylon 6 film coated with polyvinylidene chloride (K-coat nylon film) is most preferably usable.

It is advantageous that the layer composed of the resin having a melting point of 160 °C or higher has tensile moduli of elasticity in longitudinal and transverse directions being each in the range of 10 to 250 kgf / mm², preferably 100 to 200 kgf / mm², and that after the EVOH film layer and the film layer composed of the resin having a melting point of 160°C or higher have been laminated, the laminated layer has tensile moduli of elasticity in longitudinal and transverse directions being each in the range of 30 to 200 kgf / mm², preferably 50 to 150 kgf / mm². The tensile modulus of elasticity in the above-mentioned range makes pinholes less prone to generate upon ultrasonic sealing, and enables chemical resistance and water resistance for bonded portion to be kept at high levels. Conversely, a hard resin having a tensile modulus of elasticity of more than 350 kgf / mm² sometimes causes the sealing portion of the composite material for the protective clothing to induce edge cutting upon heat sealing, thereby deteriorating the chemical resistance and water resistance.

Herein the tensile modulus of elasticity was determined by a method in which tangential modulus of elasticity was determined from a chart in accordance with JIS K7127 under the conditions including a specimen of type 2 and width of 1 cm; grasping distance of 10 cm; tensile speed of 0.5 cm / min; and a testing instrument of constant speed and extension type, and was regarded as the tensile modulus of elasticity in question.

As the film containing at least a specific amount of EVOH in the composite material to be used for the protective clothing according to the present invention, there is usable a non-oriented film or uniaxially or biaxially oriented film. From the viewpoint of bonding properties of the composite material of the present invention, there may be used a coextruded films formed together with an other flexible resin such as low density polyethylene, high density polyethylene, modified polyethylene or the like.

In particular, a film containing 100% of EVOH, which is hard and liable to break, is preferably equipped on both the sides thereof with an other flexible resin layer such as a low density polyethylene layer as a protective layer or an adhesive agent layer. The flexible resin layer such as a low density polyethylene layer has favorable heat sealing property, and is advantageous in manufacturing the protective clothing according to the present invention e.g. by means of ultrasonic sealing.

A method for laminating the EVOH layer with the other flexible resin layer such as a low density polyethylene layer is not sp ecifically limited, but may be practiced by the above-mentioned coextrusion lamination or lamination by using an adhesive, however the coextrusion lamination can produce laminated films having favorable touch, and is economically advantageous.

At least two layers of the EVOH film may be each laminated with a flexible resin layer such as low density polyethylene layer, and the EVOH films may be laminated with at least two types of flexible resin layers.

As a method for bonding an EVOH-containing film or a laminated film of an EVOH-containing film and the other flexible resin layer such as a low density polyethylene layer, with the layer composed of the resin having a melting point of 160°C or higher, a bonding method by means of heat or an adhesive is cited. In this case, it is advantageous for the purpose of obtaining a flexible composite material, to adhesively bond with a hot melt resin or the like which is coated in the form of spray or powder in the range of 5 to 30 g/m², approximately. Ultrasonic bonding and heat embossing bonding each having a bonding area rate of 5 to 35%, approximately are also usable.

The entire thickness of the EVOH films to be used in the present invention is in the range of preferably 5 to 200 µm. The entire thickness thereof, when being less than 5 µm, brings about difficulty in assuring sufficient resistance against chemical substances, whereas the thickness, when being more than 200 µm, is uneconomical and besides, sometimes causes unreasonably hard composite material and deterioration of wear feeling.

The entire thickness of the other flexible resin layer to be laminated with the EVOH films is in the range of preferably 5 to 200 µm, more preferably 10 to 100 µm. The entire thickness thereof, when being less than 5 µm, brings about difficulty in exhibiting enhancement of film strength and sufficient resistance against chemical substances and water, whereas the thickness, when being more than 200 µm, sometimes causes unreasonably hard composite material and deterioration of wear feeling. The entire thickness as mentioned herein means the total thickness of each of the layers in the case where the flexible resin layer such as the low density polyethylene layer is laminated, or multi-layered EVOH films are used via the low density polyethylene layer.

The thickness of the layer composed of the resin having a melting point of 160°C or higher to be used in the present invention is in the range of preferably 5 to 150 µm. The thickness thereof, when being less than 5 µm, brings about deterioration of process passage properties, sometimes causing unsuccess in obtaining the objective composite material, whereas the thickness, when being more than 150 µm, results in hard touch and disadvantageous expenses.

The entire thickness of the EVOH-containing film or a laminated film of the EVOH-containing film and the other flexible resin layer such as the low density polyethylene layer and the laminate of the layer composed of the resin having a melting point of 160°C or higher is in the range of preferably 30 to 300 µm. The entire thickness thereof, when being less than 30 µm, sometimes brings about unsuccess in assuring objective resistance against chemical substances and water, whereas the thickness, when being more than 300 µm, gives rise to deterioration of touch and wear feeling.

The composite material according to the present invention is obtained by laminating a fibrous layer for the purpose of enhancing the strength and wear feeling thereof, with the laminated product of at least one EVOH-containing layer thus obtained or at least one laminated film of the EVOH-containing film and the other flexible resin layer such as the low density polyethylene layer and of at least one resin layer composed of the resin having a melting point of 160°C or higher (said laminated product being a resin layer having at least one layer containing at least 90% by mass of EVOH and also at least one resin layer composed of the resin having a melting point of 160°C or higher).

Examples of the fibrous layer to be used in the present invention include various fabrics such as woven fabric, knit fabric, etc.; and nonwoven fabric. The fabric which is laminated with a film is preferable rather than justifiable in terms of dually assuring the resistance against chemical substances. As the nonwoven fabric, use is made e.g. of hydroentangled nonwoven fabric, thermobonded nonwoven fabric, spunlaid nonwoven fabric, a laminate of spunlaid nonwoven fabric and meltblown nonwoven fabric, or a laminate of spunlaid nonwoven fabric and a film.

There is adopted mass per unit area of fabric being 10 to 300 g /m², approximately. The mass per unit area, when being less than 10 g / m², leads to insufficient tenacity, whereas the same, when being more than 300 g / m², tends to deteriorate the wear feeling. As the materials for the fabric, use is made e.g. of polyolefin, polyamide, polyester, rayon, cotton or wool
each in fibrous form and a mixture thereof.

As a method for bonding the fibrous layer with the layer composed of at least one EVOH-containing film and at least one layer composed of the resin having a melting point of 160°C or higher, a bonding method by means of heat or an adhesive is cited. In this case, it is advantageous for the purpose of not deteriorating the touch of the composite material, to adhesively bond e.g. with a hot melt resin which is coated in the form of spray or powder in the range of 3 to 50 g/m², approximately. Ultrasonic bonding and heat embossing bonding each having a bonding area rate of 5 to 30%, approximately are also usable.

The composite material obtained in the above-mentioned manner is processed into protective clothing such as protective clothes so that the resin layer side is located on the face, that is, located far from a human body.

In the case of sewing by using a sewing machine or the like in the present invention, since chemical substances permeate through the seam clearance and needle pinhole due to the machine, the passageway thereof needs to be sealed e.g. with a tape. It being so, bonding by means of heat, ultrasonic wave or an adhesive is preferable from the economical point of view, of which continuous bonding with a ultrasonic sewing machine is particularly preferable from the aspect of its being capable of efficient proceeding of work.

It is preferable to carry out the bonding by superimposing the faces of the resin layers not equipped with the fibrous layer in order to prevent the permeation of chemicals and the deterioration in water resistance. Such bonding as superimposing the resin layer faces and fibrous layer faces on each other and superimposing the fibrous layer faces of the same type are more prone to cause fine clearances on the bonding surfaces, thus unfavorably increasing the probability of permeating chemicals and water through the clearances.

Moreover it is preferable in regard to the constitution of the composite material to arrange the low density polyethylene layer on both the sides of the EVOH layer via modified polyolefin such as modified polyethylene; install a layer composed of the resin having a melting point of 160°C or higher on either side of the low density polyethylene layer via an adhesive; further install the fibrous layer thereon via an adhesive; and bond the low density polyethylene layer faces of the same type each on the other side on which the fiber layer was not installed, while putting together the polyethylene layer faces in order.

### EXAMPLES

In what follows, the present invention will be described in more detail with reference to comparative examples and working examples, which however shall never limit the present invention thereto. Chemical permeation resistance in each example was evaluated in accordance with the method as described hereunder.

### <Chemical permeation resistance>

Chemical permeation resistance in each example was evaluated in accordance with JIS T 8115 : 1998. Specifically a test piece was mounted in the middle of a test cell, and two compartments were prepared, including upper cell compartment and lower cell compartment with respect to the test piece. Subsequently test liquid was allowed to flow in the upper cell compartment in a prescribed amount, and the gas or liquid which permeated the test piece was collected in the upper and lower cell compartments. From the point of time when the test liquid was introduced in the upper cell compartment, the concentration of the collected fluid was indicated graphically with the elapse of time to determine the break through time and the mass of permeated fluid. Thus an evaluation was made of the chemical permeation resistance in accordance with the following grading.

| Chemical permeation resistance | |
|---|---|
| Grade | Break through time (min) |
| 6 | ≧ 480 |
| 5 | ≧ 240 |
| 4 | ≧ 120 |
| 3 | ≧ 60 |
| 2 | ≧ 30 |
| 1 | ≧ 10 |

### Example 1

Laminated film composed of five layers having an entire thickness of 50 µm was prepared by coextrusion from a central layer (EVOH layer) consisting of ethylene-vinyl alcohol copolymer (manufactured by Kuraray Co., Ltd. under the trade name "F 101", ethylene content of 32 mol %, melting point of 183°C); low density polyethylene layers placed on both the sides of the central layer; and modified polyethylene layers each placed between the central layer (manufactured by Mitsui Chemical Co., Ltd. under the trade name "Admer"), wherein the thicknesses of the EVOH layer, each of the low density polyethylene layers on both the sides and each of the intermediate modified polyethylene layers were regulated as coextrusion conditions, to 14 µm, 14 µm and 4 µm, respectively. One side of the laminated film was subjected to a corona discharge treatment.

Thereafter a film (K-coat nylon film) which had a tensile modulus of elasticity in the longitudinal direction being 200 kgf / mm², that in transverse direction being 178 kgf / mm² and a thickness of 19 µm was prepared by coating a nylon 6 film which had a melting point of 215°C, a tensile modulus of elasticity in the longitudinal direction being 208 kgf / mm², that in transverse direction being 188 kgf / mm² and a thickness of 15 µm with polyvinylidene chloride in a coating thickness of 4 µm. Subsequently multilayered film which had a tensile modulus of elasticity in the longitudinal direction being 69 kgf / mm² and that in the transverse direction being 53 kgf / mm² was prepared by dry-laminating the above-mentioned five-layered laminated film on the corona discharge treated surface thereof with the resultant film (K-coat nylon film), while putting together both the aforesaid films in order by the use of an ester based adhesive (manufactured by Dainippon Ink and Chemical Co., Ltd.).

Further a composite material was prepared by adhesively bonding grey polypropylene-spunlaid nonwoven fabric which had a mass per unit area of 70 g / m² and which was subjected to antistatic finish (manufactured by Idemitsu Unitecque Co., Ltd.) to the above-prepared multilayered film on the side of the nylon film by using EVA based hot melt resin (manufactured by Tokyo Printing Ink Mfg. Co., Ltd.) through melt blow method.

By the use of the resultant composite material, one piece type (cover-all type) chemical-resistant protective clothing was prepared so that the low density polyethylene film was arranged outside. Each portion of the protective clothing was bonded with a ultrasonic sewing machine by superimposing the surfaces on the sides of the low density polyethylene film.

The zipper portion of the chemical-resistant protective clothing was covered with a piece of the composite material according to the present invention so as to to prevent the permeation of chemical substances, and one side of the piece of the composite material was bonded to the composite material cloth, while the other open side thereof was fixed to the composite material cloth with a double-sided adhesive tape.

The chemical-resistant protective clothing thus obtained had sufficient tensile strength of 94 N at bonded portion (as measured in accordance with JIS L1093 by a grab test method) with favorable touch, and in chemical permeation tests, exhibited the chemical permeation resistance of the aforestated grade 5 or higher against a wide range of chemicals including methanol, chloroform, acetonitrile, acetone, ethyl acetate, diethylamine, dichloromethane, N,N-dimethylformamide, tetrachloroethylene, tetrahydrofuran, toluene, xylene, nitrobenzene, carbon disulfide, n-hexane and the like.

Moreover a measurement was made of water resistance at bonded portion in accordance with JIS L1092 by a low hydraulic method (hydrostatic method). As a result it was 200 cm.

On the other hand, infiltration resistance was measured in accordance with the method as prescribed in JIS T8115 Appendix 2. As a result no infiltration was recognized at all for 50% by mass aqueous solution of sodium hydroxide, 30% by mass aqueous solution of calcium chloride and 93.1% by mass sulfuric acid solution.

### Comparative Example 1

The procedure in Example 1 was repeated except that K-coat nylon film was not laminated, namely protective clothing was prepared from the composite material composed of the five-layered film and the polypropylene-spunlaid nonwoven fabric.

The resultant protective clothing had water resistance of at most 50 cm at the bonded portion and break through time for methanol of 60 minutes (grade 3) or lower.

### Example 2

A composite material was prepared by adhesively bonding hydroentangled nonwoven fabric to the side of the nylon film of the above-prepared multilayered film which had been obtained in Example 1 and composed of five-layered film laminated with the K-coat nylon film in the same manner as in Example 1, wherein the hydroentangled nonwoven fabric had a mass per unit area of 65 g / m², tenacity in the longitudinal and transverse directions being 57 N / 5 cm and 55 N / cm, respectively and a thickness of 0.50 mm, and was obtained by the steps of preparing a cross-laid web which consisted of 60% by mass of rayon fiber having 1.7 dTex and 40% by mass of conjugate fiber having 2.2 dTex, a core made of polypropylene and a sheath made of polyethylene; thereafter hydroentangling the resultant cross laid web by high pressure water stream (maximum pressure of 6.9 MPa); imparting yellow pigment thereto by using an acrylic binder; and then subjecting to drying and heat treatment. By the use of the resultant composite material, chemical-resistant protective clothing was prepared by the method same as that in Example 1 so that the faces of the low density polyethylene films were superimposed and bonded with a ulrasonic sewing machine. As was the case with Example 1, the chemical-resistant protective clothing thus obtained demonstrated excellent characteristics in touch, water resistance and chemical permeation resistance.

### Comparative Example 2

The procedure in Example 2 was repeated to prepare chemical-resistant protective clothing except that nylon 6 film was used in place of the EVOH film. The resultant protective clothing showed break through time for dichloromethane and toluene being grade 2 at the highest.

### Example 3

The procedure in Example 1 was repeated to prepare chemical-resistant protective clothing except that use was made, in place of the K-coat nylon film, of 20 µm thick polypropylene film which had been oriented and corona discharge treated on both the sides, wherein the polypropylene used therein had a melting point of 164°C, a tensile modulus of elasticity in the longitudinal direction being 337 kgf / mm², that in the transverse direction being 213 kgf / mm². The multilayered film after the lamination had a tensile modulus of elasticity in the longitudinal direction being 110 kgf / mm², that in the transverse direction being 82 kgf / mm².

The resultant protective clothing exhibited water resistance of 149 cm and chemical resistance against methanol of grade 4 (break through time of 120 minutes or longer) and at the same time, resistance against other miscellaneous chemicals as indicated in Example 1 being grade 5 or higher.

### Example 4

A composite material was prepared by adhesively bonding the multilayered film consisting of the five-layered film laminated with the K-coat nylon film as obtained in Example 1 and nylon-spunlaid nonwoven fabric having a basis weight of 50 g / mm² (manufactured by Unitika Co., Ltd.), while continuously extruding molten ethylene-vinyl acetate based resin having a thickness of 25 µm therebetween.

Both the film faces on the outside of the resultant composite material were bonded so that the faces were in opposition to each other to prepare five-fingered gloves wherein the ultrasonic seal width was 3 mm and the periphery of the glove fingers were sealed. Thereafter the gloves were turned over to turn the film outside and turn the nylon-spunlaid nonwoven fabric inside.

The gloves thus obtained were cut off, and a measurement was made of water resistance at the bonded portion with a result that it was at least 200 cm. Likewise they exhibited excellent chemical resistance as was the case with in Example 1.

### Comparative Example 3

The procedure in Example 1 was repeated to prepare protective clothing except that use was made, in place of the K-coat nylon film, of a 20 µm thick biaxially oriented polyethylene terephthalate film having a melting point of 263°C, a tensile modulus of elasticity in the longitudinal direction being 409 kgf / mm², and that in the transverse direction being 335 kgf / mm².

The resultant protective clothing had chemical permeation resistance to methanol of grade 2 (break through time 30 minutes) and water resistance of 45 cm at the bonded portion.

### Comparative Example 4

The procedure in Example 1 was repeated to prepare protective clothing except that use was made, in place of the K-coat nylon film, of a 20 µm thick oriented polyethylene film having a melting point of 134°C, a tensile modulus of elasticity in the longitudinal direction being 180 kgf / mm², and that in the transverse direction being 150 kgf / mm².

The resultant protective clothing had chemical permeation resistance to methanol of grade 1 and water resistance of 15 cm at the bonded portion.

### Comparative Example 5

The procedure in Example 1 was repeated to prepare protective clothing except that use was made, in place of the K-coat nylon film, of a 30 µm thick oriented polypropylene film having a melting point of 164°C, a tensile modulus of elasticity in the longitudinal direction being 270 kgf / mm², and that in the transverse direction being 260 kgf / mm².

The resultant protective clothing had chemical permeation resistance to methanol of grade 2 and water resistance of 25 cm at the bonded portion.

## Claims

1. Chemical-resistant protective clothing which has chemical permeation resistance to methanol of at least 120 minutes and which is formed by bonding a composite material comprising at least one resin layer containing at least 90% by mass of ethylene-vinyl alcohol based copolymer; at least one resin layer composed of a resin having a melting point of 160°C or higher; and a fibrous layer wherein the respective layers are laminated with one another to constitute the composite material.

2. The chemical-resistant protective clothing according to Claim 1 wherein the resin layer composed of a resin having a melting point of 160°C or higher has tensile moduli of elasticity in the longitudinal and transverse directions being each in the range of 10 to 250 kgf / mm².

3. The chemical-resistant protective clothing according to Claim 1 or 2 wherein the resin layer containing at least 90% by mass of ethylene-vinyl alcohol based copolymer is equipped on both the sides thereof with another flexible resin layer.

4. The chemical-resistant protective clothing according to any of the preceding claims wherein the resin layer containing at least 90% by mass of ethylene-vinyl alcohol based copolymer or the multilayered film equipped on both the sides thereof with an other flexible resin layer is equipped on either side thereof with a layer composed of a resin having a melting point of 160°C or higher.

5. The chemical-resistant protective clothing according to any of the preceding claims wherein the resin having a melting point of 160°C or higher is a polyamide based resin and / or polyvinylidene chloride based resin.

6. The chemical-resistant protective clothing according to any of the preceding claims wherein the fibrous layer is a nonwoven fabric.

7. The chemical-resistant protective clothing according to any of the preceding claims wherein the composite material is bonded by means of ultrasonic bonding.

8. The chemical-resistant protective clothing according to Claim 7 wherein the water resistance at a bonded portion is at least 100 cm.

9. The chemical-resistant protective clothing according to any of the preceding claims wherein the composite material is bonded while the faces of the resin layers are superimposed on one another.
